# FASCICULE DE BREVET EUROPEEN

(11) **EP 1 951 996 B1**
(45) Date de publication et mention de la délivrance du brevet: **03.03.2010**
(21) Numéro de dépôt: 06831132.3
(22) Date de dépôt: 17.11.2006
(51) Int. Cl.: F01N 3/04, F01N 13/00, B01D 53/92, B01D 47/00

(54) **LAVEUR POUR L'EPURATION DE GAZ D'ECHAPPEMENT D'UN MOTEUR DIESEL, SON PROCEDE DE MISE EN OEUVRE, ET VEHICULE MARIN CORRESPONDANT**
WÄSCHER ZUR REINIGUNG DER ABGASE EINES DIESELMOTORS, BETRIEBSVERFAHREN UND ENTSPRECHENDES SEEFAHRZEUG
SCRUBBER FOR CLEANING THE EXHAUST GASES OF A DIESEL ENGINE, METHOD OF OPERATING IT AND CORRESPONDING MARITIME VEHICLE

(30) Priorité: 18.11.2005 FR 0511704
(43) Date de publication de la demande: 06.08.2008
(73) Titulaire: LAB SA, 69006 Lyon (FR)
(72) Inventeur: SIRET, Bernard, F-69200 Venissieux (FR); WOILLEZ, Jacques, F-69006 Lyon (FR)
(74) Mandataire: Schouller, Jean-Philippe
(86) Numéro de dépôt international: PCT/FR2006/002537
(87) Numéro de publication internationale: WO 2007/057573

(56) Documents cités:
- EP-A- 0 396 375
- US-A- 4 368 060
- PATENT ABSTRACTS OF JAPAN vol. 003, no. 063 (C-047), 30 mai 1979 (1979-05-30) & JP 54 037071 A (CHIYODA CHEM ENG & CONSTR CO LTD), 19 mars 1979 (1979-03-19)

## Description

La présente invention concerne un laveur pour l'épuration de gaz d'échappement d'un moteur Diesel, un procédé de mise en oeuvre d'un tel laveur, ainsi qu'un véhicule marin équipé d'au moins un tel laveur.

Au sens de l'invention, un moteur Diesel est propre à fonctionner avec un carburant de type gazole, auxquels correspondent des longueurs de chaînes carbonées égales ou supérieures à 12. Les gaz d'échappement visés par l'invention, qui sont issus de la combustion de ce carburant, présentent une teneur en soufre élevée, typiquement supérieure à 1 %.

Ces moteurs Diesel sont utilisés pour de nombreuses applications, en particulier pour la production d'énergie ou pour la propulsion des navires. Dans les deux cas, les normes de rejet à l'atmosphère en vigueur limitent la teneur en oxydes de soufre SO₂ et SO₃, ainsi qu'en poussières. En effet, ces deux types de polluants, nuisibles à la santé et à l'environnement, se trouvent massivement présents dans les gaz d'échappement de ces moteurs.

La désulfuration de ces gaz d'échappement de moteur Diesel peut être réalisée par de nombreux types d'appareils, utilisés classiquement dans l'industrie. On citera notamment le filtrage sur une couche de réactif alcalin sec, ainsi que le refroidissement par évaporation d'un liquide contenant un réactif alcalin. La présente invention vise plus particulièrement une telle désulfuration, qui est opérée par un lavage de ces gaz d'échappement.

De façon classique, il est possible de réaliser ce lavage des gaz en pulvérisant dans une enceinte un liquide, qui est en général de l'eau, chargé d'un réactif chimique alcalin, qui peut être du calcaire, de la chaux, de la soude ou de la magnésie. Les oxydes de soufre se trouvent alors captés par les gouttes ainsi produites, alors que l'acide qui se forme dans ces dernières est neutralisé par le réactif alcalin. Cette solution connue est par exemple illustrée dans « Seawater flue gas desulfurization : its technical implications and performances results - K. Oikawa et al. Environmental progress, Vo122, N° 1, April 2003 ».

Ce premier état de la technique présente cependant certains inconvénients, en particulier dans la mesure où il se révèle peu adapté au traitement des gaz d'échappement des moteurs Diesel marins. En effet, même si le réactif alcalin peut être remplacé par de l'eau de mer, cette dernière doit être injectée dans des quantités particulièrement importantes, puisqu'elle présente une très faible alcalinité. Etant donné que cette eau de mer doit être pulvérisée sous haute pression, le besoin énergétique lié notamment à la consommation électrique des pompes devient alors inacceptable. Par ailleurs, les laveurs à pulvérisation, utilisés dans cette solution, présentent un pouvoir de captation des poussières médiocre, ainsi qu'une capacité d'atténuation acoustique faible, voire nulle.

A titre d'alternative, il est également connu de faire appel à une autre catégorie de laveurs, dans lesquels l'eau chargée en réactif est dirigée vers une cuve, au sein de laquelle on réalise un bullage du gaz à épurer. A cet effet, ce gaz est amené dans cette cuve par l'intermédiaire d'un grand nombre de tubes, de faible diamètre.

Les bulles ainsi formées définissent alors une grande surface d'échange gaz/liquide, à travers laquelle le gaz chargé de polluants est rapidement transféré dans le liquide de cuve, où il se trouve alors neutralisé par le réactif. Ce procédé, qui peut être utilisé pour les installations de désulfuration terrestre, a également été mis en oeuvre pour la désulfuration des échappements de moteurs Diesel marins, comme cela est par exemple décrit sur le site www.dmeinternational.com/marineexhaust.

Les laveurs à bullage, dont tire parti la seconde solution décrite ci-dessus, présentent de nombreux avantages dans le contexte d'une utilisation sur des moteurs Diesel marins. En effet, le transvasement d'une grande quantité d'eau dans la cuve réactive demande peu d'énergie, puisque la pression motrice nécessaire à un tel transvasement est très faible, notamment par comparaison à celle nécessaire pour pulvériser le liquide de lavage en gouttelettes.

Par ailleurs, un tel laveur bénéficie d'une efficacité importante, en ce qui concerne la captation des fines poussières contenues dans les gaz d'échappement. Enfin, la configuration de ce laveur, dans lequel les tubes d'admission plongent dans la cuve de bullage, confère à ce procédé une capacité satisfaisante d'atténuation des ondes sonores, générées par le moteur Diesel.

Cependant, cette seconde solution présente également certains inconvénients, liés en particulier à son manque d'efficacité, de sorte qu'elle est peu adaptée aux exigences de législations sévères, en ce qui concerne le taux de désulfuration des gaz.

On connait enfin US-A-4,368,060, lequel décrit toutes les caractéristiques du préambule de la revendication 1 annexée.

Ceci étant précisé, l'invention vise à remédier aux différents inconvénients de l'art antérieur évoqués ci-dessus. Elle vise en particulier à proposer une solution qui, tout en conservant les avantages liés aux laveurs à bullage connus, présente une efficacité supérieure à ces derniers.

A cet effet, elle a pour objet un laveur selon la revendication 1 annexée.

D'autres caractéristiques avantageuses de l'invention font l'objet des revendications 2 à 8 annexées.

L'invention a également pour objet un procédé de mise en oeuvre du laveur tel que défini ci-dessus, dans lequel on alimente en continu le liquide de lavage dans le volume de lavage, par l'intermédiaire des moyens d'alimentation.

D'autes caractéristiques avantageuses de l'invention font l'objet des revendications 11 et 12 annexées.

L'invention a enfin pour objet un véhicule marin, comprenant au moins un moteur Diesel, qui est associé à un laveur tel que défini ci-dessus.

L'invention va être décrite ci-après, en référence aux dessins annexés, donnés uniquement à titre d'exemples non limitatifs, dans lesquels :
- la figure 1 est une coupe longitudinale d'un laveur conforme à l'invention ; et
- les figures 2 et 3 sont des vues de face, illustrant deux configurations d'un embout appartenant à un tube d'admission de gaz, qui équipe le laveur de la figure 1.

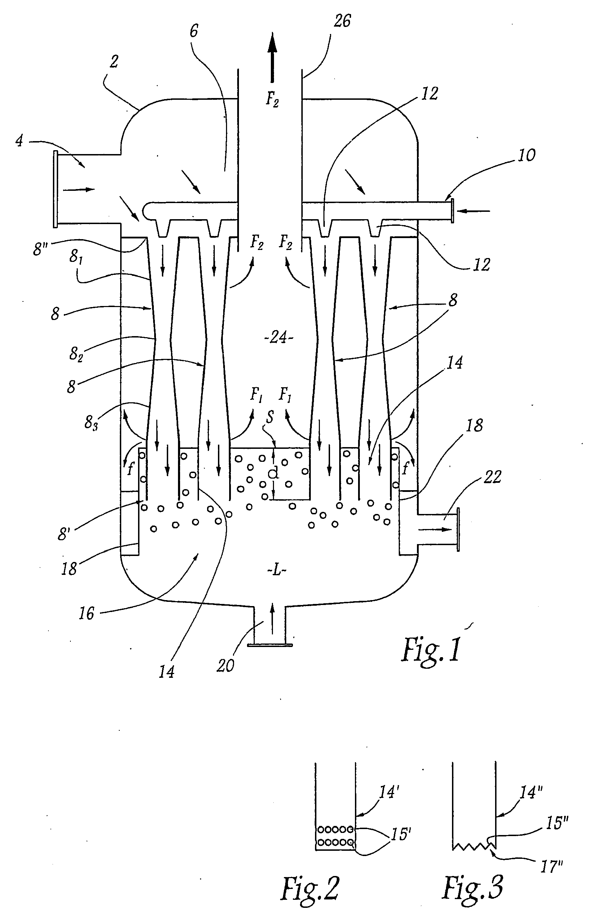

Le laveur illustré sur la figure 1 comprend une enceinte 2, qui est pourvue d'une entrée 4 d'admission du gaz à épurer. Cette entrée est mise en communication avec un échappement de moteur Diesel, non représenté, qui appartient par exemple à un véhicule marin ou bien à une centrale de production d'énergie thermique.

Cette entrée 4 débouche dans une chambre de tranquillisation 6, dont le plancher reçoit plusieurs tubes 8, destinés au passage des gaz. Ces tubes 8 présentent une forme de Venturi, à savoir qu'ils possèdent un tronçon amont convergent 8₁, un col médian de section restreinte 8₂, ainsi qu'un tronçon aval divergent 8₃. Comme on le verra dans ce qui suit, ce tronçon divergent permet de convertir en pression l'énergie cinétique des fluides transportés dans chaque tube 8. En d'autres termes, la pression des fluides à l'extrémité aval 8' de chaque tube est nettement supérieure à leur pression au niveau de l'extrémité amont 8".

Une conduite 10 est prévue au voisinage des différents tubes 8, au-dessus de ces derniers. Cette conduite 10 est pourvue de différentes buses 12 permettant d'introduire, par pulvérisation à haute pression, du liquide de lavage à l'entrée de chaque tube 8, à l'aide d'une pompe non représentée. A titre d'exemple non limitatif, la pression à laquelle est pulvérisé ce liquide de lavage, est de 3 à 8 bars. Un mélange très turbulent de gaz à épurer et d'eau de mer s'écoule donc dans chaque tube 8.

Le tronçon divergent 8₃ de chaque tube 8 se prolonge avantageusement par un embout cylindrique 14, de section constante, définissant l'extrémité aval précitée 8'. La partie basse de l'enceinte 2 définit en outre un bac de lavage 16, délimité par des parois périphériques 18. Le sommet de ces dernières forme, en service, une surface supérieure libre S du liquide de lavage, noté L.

On soulignera que les différents embouts 14 s'étendent au-dessous de la surface libre S, de sorte que le mélange issu des différents tubes 8 barbote au sein du liquide L contenu dans ce bac 16. Cependant, à titre de variante, on peut prévoir de supprimer ces embouts 14, de sorte que les tronçons divergents 8₃ plongent directement dans le liquide de lavage L.

En outre, si l'on note s la somme des différentes sections transversales des tubes 8, au niveau de la surface libre S, le rapport s/S est avantageusement inférieur à 30 %, de préférence à 8 %. Cette mesure permet aux différentes réactions de neutralisation de se produire de façon satisfaisante, sans cependant impliquer une augmentation inacceptable de la taille de l'ensemble du laveur.

Le bac de lavage 16 est alimenté, via une conduite 20, en un liquide de lavage qui est par exemple de l'eau de mer, ou un mélange d'eau de mer et d'un réactif alcalin tel que de la soude. Il est par ailleurs prévu une conduite d'évacuation 22, placée au voisinage des parois périphériques 18 du bac 16, au-dessous de la surface libre S.

En service, les polluants tels que les oxydes de soufre et les poussières, initialement présents dans le gaz à épurer, sont transférés au liquide de lavage L, présent dans le bac 16. Le gaz ainsi épuré remonte alors vers la surface libre S, puis est dirigé (flèches F₁) vers une chambre de récupération 24, isolée de la chambre de tranquillisation 6 par l'intermédiaire des parois des différents tubes 8. Ce gaz épuré est enfin évacué (flèches F₂) par au moins une cheminée verticale 26, qui traverse de façon étanche le plancher et le plafond de la chambre de tranquillisation 6, qui est associée à une conduite d'évacuation non représentée.

On notera que, comme cela est illustré sur la figure 1, le liquide de lavage est alimenté en continu par l'intermédiaire de la conduite 20, ce qui confère au bac de lavage 16 un fonctionnement en mode déversoir. En d'autres termes, le liquide de lavage L s'étend, de façon permanente, jusqu'à la surface libre S, alors que son trop-plein se déverse par gravité, selon les flèches f, jusqu'à la conduite d'évacuation 22. De la sorte, le niveau d'immersion des tubes d'admission 8 est stable et parfaitement fixé, malgré la présence éventuelle de perturbations extérieures telles qu'une variation du débit d'alimentation du bac, ou encore une inclinaison du navire.

Les figures 2 et 3 illustrent deux variantes de réalisation de l'embout immergé, prévu à l'extrémité aval du tube 8.

Tout d'abord, en référence à la figure 2, l'extrémité libre de l'embout immergé 14' peut être creusée d'orifices latéraux calibrés 15'. A titre de variante supplémentaire, en référence à la figure 3, l'arête de sortie 17" de cet embout immergé 14" peut être pourvue d'un crénelage 15".

Ces deux configurations permettent de réduire la perte de pression subie par le gaz au débouché de l'embout 14' ou 14", tout en fractionnant ce gaz en petites bulles favorables à un bon contact entre le gaz et le liquide. Par ailleurs, ces mesures permettent de faciliter l'évacuation latérale du gaz en direction du liquide de lavage.

On conçoit que les différentes dimensions du laveur conforme à l'invention peuvent être adaptées en fonction du débit de gaz à traiter. Ainsi, on augmentera le nombre de tubes d'admission 8, ainsi que le diamètre du laveur, avec la valeur de ce débit.

A titre d'exemple non limitatif, chaque tube d'admission peut présenter les caractéristiques suivante
- Débit de gaz traversant : 50 à 800 Nm³/h ;
- Diamètre du col 8₂ : 50 à 120 mm ;
- Longueur, à savoir distance entre les extrémités amont 8'' et aval 8' : 10 à 20 fois le diamètre du col 8₂ ;
- Diamètre de sortie, à l'extrémité aval 8' de l'embout 14 : 50 à 150 mm ;
- Diamètre des orifices latéraux de l'embout : 5 à 15 mm ;
- Nombre d'orifices latéraux : tel que la vitesse du gaz à travers ces orifices soit de l'ordre de 2 à 20 m/s ;
- Distance d entre l'extrémité aval 8' et la surface libre S, à savoir profondeur d'immersion des tubes 8 : 50 à 500 mm ;
- Débit pulvérisé : 3 à 10 m³/h ;
- Pression de pulvérisation : 3 à 8 bars.

L'invention permet d'atteindre les objectifs précédemment mentionnés.

En effet, il est du mérite de la Demanderesse d'avoir découvert que le procédé antérieur, faisant intervenir les laveurs à bullage, présente une efficacité limitée pour la raison suivante. En effet, dans un tel laveur, le gaz doit disposer d'une pression motrice suffisante pour ressortir des tubes immergés dans le bac de lavage. De façon plus précise, la pression du gaz doit au minimum pouvoir s'opposer à la pression créée par la colonne d'eau correspondant à la profondeur d'immersion du tube.

Or, ce procédé par bullage présente une efficacité suffisante, uniquement dans le cas où cette profondeur d'immersion est relativement importante. Dans ces conditions, la pression couramment disponible à la sortie des échappements de moteur Diesel ne permet pas au gaz de s'échapper des tubes, à une telle profondeur. En effet, si cette limite de contre-pression est dépassée, le moteur cale ou subit des dommages mécaniques irréversibles.

En résumé, le procédé de l'art antérieur trouve sa limite dans le fait que, si l'on souhaite que le moteur fonctionne correctement, il est nécessaire de limiter la profondeur d'immersion des tubes, ce qui implique une faible efficacité d'épuration.

Au contraire, dans l'invention, le gaz à épurer possède, à la sortie du tube d'admission, une pression nettement supérieure à celle qu'il présente à l'entrée. Dans ces conditions, cette surpression conférée au gaz lors de son trajet dans le tube autorise une capacité d'immersion de celui-ci, qui est bien supérieure à celle permise dans l'art antérieur. Par conséquent, étant donné que l'extrémité aval du tube peut s'étendre plus bas que dans l'état de la technique, toutes choses égales par ailleurs, l'efficacité de captation des polluants du laveur de l'invention est nettement supérieure à celle d'un laveur classique.

De façon plus précise, lorsqu'on introduit le liquide au voisinage de l'entrée de chaque tube Venturi, ce liquide aspire le gaz à épurer et le propulse à grande vitesse dans le col de ce Venturi. Puis, dans le tronçon divergent, l'énergie cinétique ainsi conférée au gaz se trouve transformée en énergie de pression de sorte que, comme on l'a vu ci-dessus, la pression à la sortie du tube est nettement supérieure à la pression à l'entrée de ce dernier.

Ainsi, conformément à l'invention, les différents tubes Venturi 8 sont implantés à la place des tubes de l'art antérieur, de section sensiblement constante. Par conséquent, comme on l'a vu ci-dessus, il est possible d'immerger ces tubes de façon plus profonde, selon une distance supérieure par exemple de 20 à 100 % par rapport à l'art antérieur. En outre, la turbulence générée par l'impact du fluide, évacué des tubes Venturi dans le liquide de lavage, augmente les surfaces d'échange entre le gaz et le liquide, ce qui permet d'améliorer encore le transfert et la captation des polluants.

On notera également que les tubes d'admission utilisés dans l'invention disposent, en tant que tels, d'une capacité non négligeable de captation des polluants gazeux particulaires, puisqu'ils constituent en eux-mêmes des laveurs à pulvérisation.

On notera enfin que le laveur de l'invention ne se heurte pas à la limitation des laveurs à pulvérisation en termes de consommation électrique excessive. En effet, seule une faible partie, typiquement voisine de 20 %, du débit d'eau de mer nécessaire est pulvérisée à travers les tubes 8.

## Revendications

1. Laveur pour l'épuration de gaz d'échappement d'un moteur Diesel, comprenant une enceinte (2), une entrée (4) du gaz à épurer, mise en communication avec l'échappement dudit moteur Diesel, un volume de lavage (16), destiné à la réception d'un liquide de lavage dudit gaz à épurer, ce volume de lavage (16) étant propre à définir, en service, une surface supérieure libre (S) du liquide de lavage (L), plusieurs tubes (8) d'admission du gaz, présentant une extrémité amont (8") propre à être alimentée par ladite entrée (4), ainsi qu'une extrémité aval (8') débouchant dans le volume de lavage (16), des moyens (10, 12) d'introduction du liquide de lavage au voisinage de l'extrémité amont (8") des tubes d'admission (8), des moyens d'alimentation (20) en liquide de lavage, débouchant dans le volume de lavage (16), ainsi que des moyens (26) d'évacuation des gaz épurés hors de l'enceinte, **caractérisé en ce que** les moyens d'introduction (10, 12) sont adaptés pour introduire le liquide de lavage à l'entrée de chaque tube (8) à une pression comprise entre 3 et 8 bars et **en ce que** chaque tube d'admission (8) est adapté pour conférer au gaz à épurer une pression qui est nettement supérieure, à l'extrémité aval (8') de ce tube, à la pression du gaz à l'extrémité amont (8") dudit tube (8) et **en ce que** l'extrémité aval (8') de chaque tube (8) s'étend en service au-dessous de ladite surface libre (S) du liquide de lavage (L).

2. Laveur selon la revendication 1, **caractérisé en ce que** le rapport entre la pression du gaz à l'extrémité aval (8') et la pression du gaz à l'extrémité amont (8") est supérieur à 1,3, de préférence à 1,5.

3. Laveur selon la revendication 1 ou 2, **caractérisé en ce que** chaque tube est un tube de Venturi (8), comprenant un tronçon amont convergent (8₁), un col médian (8₂), ainsi qu'un tronçon aval divergent (8₃).

4. Laveur selon la revendication 3, **caractérisé en ce que** le tronçon divergent (8₃) est prolongé par un embout (14 ; 14' ; 14") de section sensiblement constante, s'étendant au-dessous de ladite surface libre (S).

5. Laveur selon la revendication 4, **caractérisé en ce que** ledit embout (14' ; 14") est creusé d'orifices latéraux (15') ou est pourvu d'un crénelage (15") le long de son arête de sortie (17'').

6. Laveur selon l'une des revendications précédentes, **caractérisé en ce que** l'extrémité aval (8') de chaque tube (8) est séparée de la surface libre (S) selon une distance (d) supérieure à 50 mm, de préférence à 150 mm.

7. Laveur selon l'une des revendications précédentes, **caractérisé en ce que** la somme (s) des sections transversales des différents tubes d'admission (8) est inférieure à 30 %, de préférence à 8 % de ladite surface libre (S).

8. Laveur selon l'une quelconque des revendications précédentes, **caractérisé en ce que** ce laveur comprend également des moyens (22) d'évacuation du liquide de lavage (L) hors de l'enceinte (2), qui sont propres à être alimentés en débordement depuis le volume de lavage (16).

9. Procédé de mise en oeuvre du laveur conforme à l'une quelconque des revendications précédentes, dans lequel on alimente en continu le liquide de lavage (L) dans le volume de lavage (16), par l'intermédiaire des moyens d'alimentation (20).

10. Procédé suivant la revendication 9, **caractérisé en ce qu'**on introduit le liquide de lavage, dans les moyens d'introduction (10, 12), à une pression comprise entre 3 et 8 bars, de préférence entre 5 et 6 bars.

11. Procédé suivant l'une des revendications 9 ou 10, **caractérisé en ce qu'**on utilise un liquide de lavage qui est de l'eau de mer, ou un mélange d'eau de mer et de réactif alcalin.

12. Véhicule marin comprenant au moins un moteur Diesel, qui est associé à un laveur conforme à l'une quelconque des revendications 1 à 8.

## Claims

1. A scrubber for cleaning the exhaust gas of a diesel engine, comprising a vessel (2), an inlet (4) for the gas to be cleaned, said inlet being in communication with the exhaust of said diesel engine, a scrubbing volume (16) intended to receive a scrubbing liquid, for scrubbing said gas to be cleaned, this scrubbing volume (16) being suitable for defining, in service, a free upper surface (S) of the scrubbing liquid (L), several gas intake tubes (8), which have an upstream end (8'') suitable for being supplied by said inlet (4) and a downstream end (8') emerging in the scrubbing volume (16), means (10, 12) for introducing the scrubbing liquid, near the upstream end (8") of the intake tubes (8), scrubbing liquid feed means (20), opening into the scrubbing volume (16), and also means (26) for discharging the cleaned gases out of the vessel, **characterized in that** the introducing means (10, 12) are adapted for introducing the scrubbing liquid at the inlet of each tube (8) at a pressure from 3 to 8 bars and **in that** each intake tube (8) is adapted to give the gas to be cleaned a pressure that is substantially higher at the downstream end (8') of this tube than the pressure of the gas at the upstream end (8'') of said tube (8) and **in that**, in use, the downstream end (8') of each tube (8) extends below said free surface (S) of the scrubbing liquid (L).

2. The scrubber as claimed in claim 1, **characterized in that** the ratio of the pressure of the gas at the downstream end (8') to the pressure of the gas at the upstream end (8'') is greater than 1.3, preferably greater than 1.5.

3. The scrubber as claimed in claim 1 or 2, **characterized in that** each tube is a Venturi tube (8) comprising a converging upstream portion (8₁), a central throat (8₂) and a diverging downstream portion (8₃).

4. The scrubber as claimed in claim 3, **characterized in that** the diverging portion (8₃) is extended by a nozzle (14; 14'; 14") of approximately constant cross section, which extends below said free surface (S).

5. The scrubber as claimed in claim 4, **characterized in that** said nozzle (14'; 14'') is perforated by lateral orifices (15') or is provided with a serration (15'') along its outlet edge (17'').

6. The scrubber as claimed in one of the preceding claims, **characterized in that** the downstream end (8') of each tube (8) is at a distance (d) of greater than 50 mm, preferably greater than 150 mm, from the free surface (S).

7. The scrubber as claimed in one of the preceding claims, **characterized in that** the sum (s) of the cross sections of the various intake tubes (8) is less than 30%, preferably less than 8%, of the area of said free surface (S).

8. The scrubber as claimed in any one of the preceding claims, **characterized in that** this scrubber also includes means (22) for discharging the scrubbing liquid (L) from the vessel (2), which means can be fed as outflow from the scrubbing volume (16).

9. A method of operating the scrubber as claimed in any one of the preceding claims, in which the scrubbing liquid (L) is fed continuously into the scrubbing volume (16) via the feed means (20).

10. The method as claimed in claim 9, **characterized in that** the scrubbing liquid is introduced into the introduction means (10, 12) at a pressure of between 3 and 8 bar, preferably between 5 and 6 bar.

11. The method as claimed in either of claims 9 and 10, **characterized in that** sea water or a sea water/alkaline reactant mixture is used as scrubbing liquid.

12. A marine vehicle comprising at least one diesel engine with which a scrubber as claimed in any one of claims 1 to 8 is associated.

## Patentansprüche

1. Wäscher zur Reinigung von Abgasen eines Dieselmotors, umfassend ein Gehäuse (2), einen Einlass (4) für das zu reinigende Gas, der mit dem Auspuff des Dieselmotors verbunden ist, einen Waschraum (16), der zur Aufnahme einer Flüssigkeit zum Waschen des zu reinigenden Gases bestimmt ist, wobei dieser Waschraum (16) dafür eingerichtet ist, im Betrieb eine freie Oberfläche (S) der Waschflüssigkeit (L) zu definieren, mehrere Gaseinlassrohre (8), die ein stromaufwärtiges Ende (8"), das dafür eingerichtet ist, von dem Einlass (4) gespeist zu werden, sowie ein stromabwärtiges Ende (8'), das in den Waschraum (16) mündet, aufweisen, Mittel (10, 12) zum Einleiten der Waschflüssigkeit in die Nähe des stromaufwärtigen Endes (8") der Einlassrohre (8), Mittel zur Versorgung (20) mit Waschflüssigkeit, die in den Waschraum (16) münden, sowie Mittel (26) zur Ableitung der gereinigten Gase aus dem Gehäuse, **dadurch gekennzeichnet, dass** die Einleitungsmittel (10, 12) dafür geeignet sind, die Waschflüssigkeit in den Eingang jedes Rohres (8) mit einem Druck zwischen 3 und 8 bar einzuleiten, dadurch, dass jedes Einlassrohr (8) dafür geeignet ist, dem zu reinigenden Gas einen Druck zu verleihen, welcher am stromabwärtigen Ende (8') dieses Rohres deutlich größer ist als der Druck des Gases am stromaufwärtigen Ende (8") des Rohres (8), und dadurch, dass sich das stromabwärtige Ende (8') jedes Rohres (8) im Betrieb unterhalb der freien Oberfläche (S) der Waschflüssigkeit (L) erstreckt.

2. Wäscher nach Anspruch 1, **dadurch gekennzeichnet, dass** das Verhältnis zwischen dem Druck des Gases am stromabwärtigen Ende (8') und dem Druck des Gases am stromaufwärtigen Ende (8") größer als 1,3, vorzugsweise größer als 1,5 ist.

3. Wäscher nach Anspruch 1 oder 2, **dadurch gekennzeichnet, dass** jedes Rohr ein Venturirohr (8) ist, das einen konvergierenden stromaufwärtigen Abschnitt (8₁), einen mittleren Hals (8₂) sowie einen divergierenden stromabwärtigen Abschnitt (8₃) umfasst.

4. Wäscher nach Anspruch 3, **dadurch gekennzeichnet, dass** der divergierende Abschnitt (8₃) durch ein Ansatzstück (14; 14'; 14") mit im Wesentlichen konstantem Querschnitt verlängert ist, das sich unterhalb der freien Oberfläche (S) erstreckt.

5. Wäscher nach Anspruch 4, **dadurch gekennzeichnet, dass** das Ansatzstück (14'; 14") von seitlichen Öffnungen (15') durchbohrt ist oder mit Zacken (15") entlang seiner Ausgangskante (17") versehen ist.

6. Wäscher nach einem der vorhergehenden Ansprüche, **dadurch gekennzeichnet, dass** das stromabwärtige Ende (8') jedes Rohres (8) von der freien Oberfläche (S) einen Abstand (d) aufweist, der größer als 50 mm, vorzugsweise größer als 150 mm ist.

7. Wäscher nach einem der vorhergehenden Ansprüche, **dadurch gekennzeichnet, dass** die Summe (s) der Querschnitte der verschiedenen Einlassrohre (8) weniger als 30 %, vorzugsweise weniger als 8 % der freien Oberfläche (S) beträgt.

8. Wäscher nach einem der vorhergehenden Ansprüche, **dadurch gekennzeichnet, dass** dieser Wäscher außerdem Mittel (22) zur Ableitung der Waschflüssigkeit (L) aus dem Gehäuse (2) umfasst, welche dafür eingerichtet sind, durch Überlauf aus dem Waschraum (16) gespeist zu werden.

9. Verfahren zum Betrieb des Wäschers nach einem der vorhergehenden Ansprüche, wobei die Waschflüssigkeit (L) über die Versorgungsmittel (20) kontinuierlich in den Waschraum (16) eingespeist wird.

10. Verfahren nach Anspruch 9, **dadurch gekennzeichnet, dass** die Waschflüssigkeit in die Einleitungsmittel (10, 12) mit einem Druck zwischen 3 und 8 bar, vorzugsweise zwischen 5 und 6 bar, eingeleitet wird.

11. Verfahren nach einem der Ansprüche 9 oder 10, **dadurch gekennzeichnet, dass** eine Waschflüssigkeit verwendet wird, welche Meerwasser oder ein Gemisch von Meerwasser und einem alkalischen Reagens ist.

12. Seefahrzeug, das mindestens einen Dieselmotor umfasst, welcher einem Wäscher nach einem der Ansprüche 1 bis 8 zugeordnet ist.
